# EUROPEAN PATENT APPLICATION

(11) **EP 3 422 525 A1**
(43) Date of publication of application: **02.01.2019**
(21) Application number: 17756677.5
(22) Date of filing: 24.02.2017
(51) Int. Cl.: H02J 3/46, G06Q 50/06, H02J 3/00, H02J 3/32, H02J 3/38, H04Q 9/00

(54) **POWER MANAGEMENT SERVER, POWER MANAGEMENT SYSTEM, AND POWER MANAGEMENT METHOD**

(30) Priority: 25.02.2016 JP 2016034811
(71) Applicant: Kyocera Corporation, Kyoto-shi Kyoto 612-8501 (JP)
(72) Inventor: HIDAKA Hiroyuki, Kyoto-shi Kyoto 612-8501 (JP)
(74) Representative: TBK
(86) International application number: PCT/JP2017/007235
(87) International publication number: WO 2017/146243

(57) **Abstract**

This power management server includes a controller that is configured to be communicably connected to a first power generation apparatus that supplies power to a load of a customer facility that is connected to a power grid, and to a power supply server that manages supply of power to the power grid from a second power generation apparatus that is different from the first power generation apparatus. The controller is configured to acquire a state of the first power generation apparatus, and, if the controller has acquired information that the first power generation apparatus will change over to a maintenance mode, to output to the power supply server a supply command to cause the second power generation apparatus to supply power corresponding to a reduction in output of the first power generation apparatus.

## Description

### CROSS-REFERENCE TO RELATED APPLICATION

The present application asserts the priority right of Japanese Patent Application 2016-34811 (filed on 25 February 2016), and hereby incorporates the entire content of the disclosure thereof by reference.

### TECHNICAL FIELD

This disclosure relates to a power management server, to a power management system, and to a power management method.

### BACKGROUND

A customer who has entered into a high voltage electricity reception contract with a power enterprise is able to lower the basic electricity charge by lowering the power contracted with the power enterprise. The customer may provide a distributed power supply apparatus in a customer facility, and is then able to reduce the amount of electrical power received from the power grid by supplying power provided within the customer facility. The customer may conclude a contract for supply of private power generation with a power enterprise, in order to guard against the risk that the received power may increase due to a fault with the distributed power supply apparatus or the like (for example, refer to JP2007-68288A (PTL 1)). It is desirable to reduce the cost for guarding against the risk that the received power may increase and exceed the contracted power.

### CITATION LIST

### Patent Literature

PTL 1: JP2007-68288A

### SUMMARY

A power management server according to an embodiment of the disclosure comprises a controller. The controller is configured to be communicably connected to a first power generation apparatus that supplies power to a load of a customer facility that is connected to a power grid, and to a power supply server that manages supply of power to the power grid from a second power generation apparatus that is different from the first power generation apparatus. The controller is configured to acquire a state of the first power generation apparatus. If the controller has acquired information that the first power generation apparatus will change over to a maintenance mode, to output to the power supply server a supply command to cause the second power generation apparatus to supply power corresponding to a reduction in output of the first power generation apparatus.

A power management system according to an embodiment of the present disclosure includes a first power generation apparatus that supplies power to a load of a customer facility that is connected to a power grid. The power management system includes a power management server that acquires a state of the first power generation apparatus. The power management system includes a power supply server that manages supply of power to the power grid from a second power generation apparatus that is different from the first power generation apparatus. If the power management server has acquired information that the first power generation apparatus will change over to a maintenance mode, the power management server outputs to the power supply server a supply command to cause the second power generation apparatus to supply power corresponding to a reduction in the output of the first power generation apparatus.

A power management method according to an embodiment of the present disclosure is a power management method for a power management server. The power management server is configured to be communicably connected to a first power generation apparatus that supplies power to a load of a customer facility that is connected to a power grid. The power management server is configured to be communicably connected to a power supply server that manages supply of power to the power grid from a second power generation apparatus that is different from the first power generation apparatus. The power management method includes a step of acquiring a state of the first power generation apparatus. The power management method includes a step of, if having acquired information that the first power generation apparatus will change over to a maintenance mode, outputting to the power supply server a supply command to cause the second power generation apparatus to supply power corresponding to a reduction in output of the first power generation apparatus.

### BRIEF DESCRIPTION OF THE DRAWINGS

FIG. 1 is a block diagram illustrating an example of a schematic configuration of a power management system according to a first embodiment;
FIG. 2 is a block diagram illustrating an example of a schematic configuration of a customer facility shown in FIG. 1;
FIG. 3 is a sequence diagram illustrating an example of operation according a contract;
FIG. 4 is a sequence diagram illustrating an example of operation according to a contract;
FIG. 5 is a graph illustrating an example of transition of the sum of received power and generated power;
FIG. 6 is a graph illustrating an example of transition of the sum of received power and generated power, according to an embodiment;
FIG. 7 is a graph illustrating an example of transition of the sum of received electric power and generated power, according to a Comparison Example #1;
FIG. 8 is a graph illustrating an example of transition of the sum of received electric power and generated power, according to a Comparison Example #2;
FIG. 9 is a graph illustrating an example of transition of the sum of received electric power and generated power, according to a Comparison Example #3;
FIG. 10 is a flow chart illustrating an example of a managing sequence for received power;
FIG. 11 is a flow chart illustrating an example of a processing sequence of a power management server;
FIG. 12 is a flow chart illustrating an example of a processing sequence of the power management server;
FIG. 13 is a flow chart illustrating an example of a processing sequence of a second power enterprise server; and
FIG. 14 is a flow chart illustrating an example of a processing sequence of a power management server according to a second embodiment.

### DETAILED DESCRIPTION

In a case in which a distributed power supply apparatus is provided in a customer facility, when a fault occurs with the distributed power supply apparatus, the power that the customer facility needs to receive increases. In this case, the contracted power level with the power enterprise may increase. In order to avoid the risk of an increase of the contracted power level due to a fault with the distributed power supply apparatus, the customer may conclude a contract for supply of private power generation with a power enterprise. A customer who uses power generated by a private power generation facility such as a distributed power supply apparatus or the like may ordinarily not receive supply of an amount of power from the power enterprise corresponding to the power generated by the private power generation facility. A contract for supply of private power generation refers to a type of contract that is employed in cases where power supply is to be received from a power enterprise in order to cover a power deficit due to inspection or repair of the private power generation facility, or due to an accident. Such contracts for supply of private power generation may also be said to be contracts according to which, due to the addition of a predetermined contracted charge, the contracted power level used for calculating the electricity charge is not increased, even in cases where the received power exceeds the contracted power level.

On the other hand, it may be considered that, by performing maintenance to prevent a fault in the distributed power supply apparatus, the risk of an increase in the contracted power level will be avoided. A maintenance business monitors the status in each customer facility, and determines whether maintenance of the distributed power supply apparatus is necessary. In some cases, a maintenance business may employ remote monitoring systems for monitoring the status of customer equipment.

In a customer facility that is equipped with a distributed power supply apparatus, when attempting to avoid an increase in the contracted power level by the method described above, the following may occur.

For example, when a customer concludes a contract for supply of private power generation with a power enterprise, a cost is levied in relation to the contract for supply of private power generation. The cost relating to a contract for supply of private power generation is a cost that is levied without any relationship to the amount of electricity used, and is a burden from the point of view of the customer.

For example, a maintenance business may perform maintenance while avoiding the time slots and the timings at which power consumption by a consumer facility is at a peak. In cases where maintenance work is performed late at night or on a holiday, the labor costs related to maintenance may increase.

It is desirable to reduce the cost entailed by reducing the contracted power level.

### (Embodiment #1)

### [System Configuration]

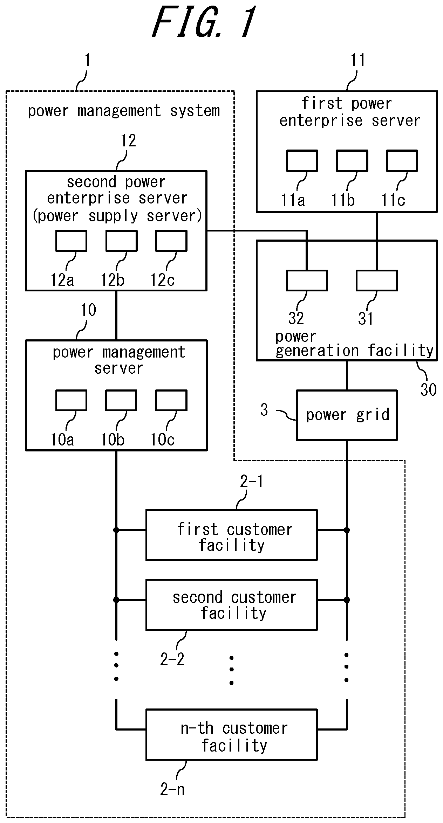

As illustrated in Fig. 1, a power management system 1 includes a power management server 10, a second power enterprise server 12, and a customer facility 2.

The power management server 10 is communicably connected to consumer facilities 2 at n locations which receive electricity from a power grid 3. The consumer facilities 2 are also referred to as the first customer facility 2-1 through the n-th customer facility 2-n. The power management server 10 is provided by a maintenance business that is contracted for maintenance of the subject consumer facility 2. Power is supplied to the power grid 3 from power generation facilities 30.

The power generation facilities 30 include a first power generation facility 31 that is controlled by a first power enterprise server 11 and a second power generation facility 32 that is controlled by the second power enterprise server 12. The first power enterprise server 11 and the second power enterprise server 12 are servers that are provided by a first power enterprise and by a second power enterprise respectively. The first power enterprise and the second power enterprise conclude power supply/reception contracts with the customers who possess the consumer facilities 2. The customers who possess the consumer facilities 2 are simply referred to as customers. The first power enterprise and the second power enterprise supply power to the consumer facilities 2 via the power grid 3. The first power enterprise and the second power enterprise may be, for example, general electrical power enterprises such as power companies and so on, specific scale electricity enterprises, or retail electricity enterprises or the like, but are not limited thereto. A specific scale electricity businesses is also referred to as a PPS (Power Producer and Supplier).

The power management server 10 comprises a controller 10a, a memory 10b, and a communication interface 10c. And the first power enterprise server 11 comprises a controller 11a, a memory 11b, and a communication interface 11c. The second power enterprise server 12 comprises a controller 12a, a memory 12b, and a communication interface 12c.

The controllers 10a, 11a, and 12a may, for example, be configured as processors and so on. The controllers 10a, 11a, and 12a realize various functions by acquiring programs stored in the respective memories 10b, 11b, and 12b and executing those programs.

The memories 10b, 11b, and 12b store information acquired from the controllers 10a, 11a, and 12a respectively. The memories 10b, 11b, and 12b store programs and so on executed by the controllers 10a, 11a, and 12a respectively. The memories 10b, 11b, and 12b may, for example, be configured as semiconductor memories or magnetic disks or the like, but they are not limited thereto.

The communication interfaces 10c, 11c, and 12c are used for communication with other servers and so on. The communication interfaces 10c, 11c, and 12c may, for example, be devices such as LANs, but they are not limited thereto. The communication interfaces 10c, 11c, and 12c can communicate with other servers and so on by wired communication or by wireless communication.

The power management server 10 is communicably connected to the second power enterprise server 12, and outputs control information with respect to the second power enterprise. The control information may, for example, include information that instructs supply of power to the power grid 3 with respect to the second power enterprise. Information that instructs supply of power to the power grid is referred to as a supply demand. Here, the second power enterprise server 12 is referred to as a "power supply server".

### [An example of the structure of a customer facility]

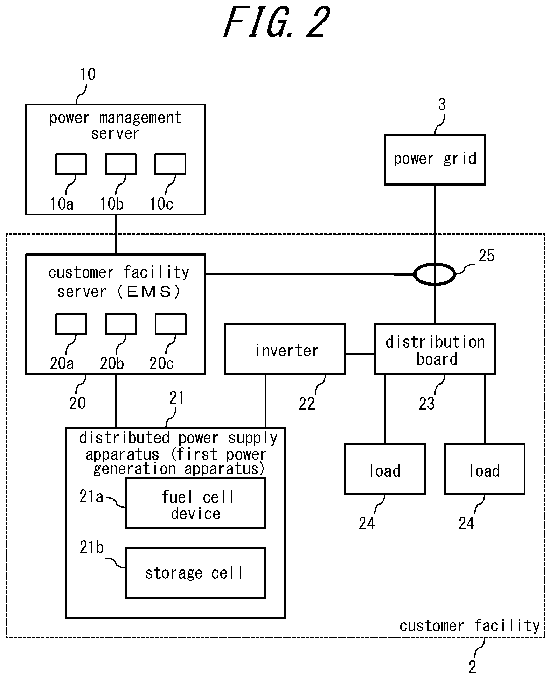

As shown in Fig. 2, a customer facility 2 comprises a customer facility server 20, a distributed power supply apparatus 21, an inverter 22, a distribution board 23, loads 24, and a current sensor 25. The customer facility server 20 is also sometimes termed an EMS (Energy Management System). All or some of the various parts that constitute the customer facility 2 can be subjects of maintenance by a maintenance business. In this embodiment, at least the distributed power supply apparatus 21 is the subject of maintenance. The customer facility server 20 is communicably connected with the power management server 10. And the distribution board 23 is connected to the power grid 3.

The customer facility server 20 comprises a controller 20a, a memory 20b, and a communication interface 20c. The controller 20a, the memory 20b, and the communication interface 20c of the customer facility server 20 have structures similar to the controller 10a, the memory 10b, and the communication interface 10c of the power management server 10 respectively. The customer facility server 20 communicates with the power management server 10 by employing the communication interface 20, and transmits information thereto and receives information therefrom.

The customer facility server 20 is communicably connected to the distributed power supply apparatus 21 and to the current sensor 25. The controller 20a of the customer facility server 20 acquires information specifying a state of the distributed power supply apparatus 21, and stores this information in the memory 20b. And the controller 20a acquires the value measured by the current sensor 25, and stores it in the storage unit 20b. Moreover, the customer facility server 20 outputs control commands to the distributed power supply apparatus 21.

The distributed power supply apparatus 21 is communicably connected to the customer facility server 20. And the distributed power supply apparatus 21 is connected to the inverter 22. For example, the distributed power supply apparatus 21 may be a device that comprises a fuel cell device 21a and/or a storage cell 21b, and may output DC power to the inverter 22. The fuel cell device 21a is a device that generates electricity by employing gas. For example, the fuel cell device 21a may be a solid oxide type fuel cell or may be a solid polymer type fuel cell, but these should not be considered as being limitative. A solid oxide type fuel cell is also sometimes termed a "SOFC" (Solid Oxide Fuel Cell). And a solid polymer type fuel cell is also sometimes termed a "PEFC" (Polymer Electrolyte Fuel Cell). The storage cell 21b receives DC power from the inverter 22 and stores that power, and outputs power that it has stored to the inverter 22 as DC power. The storage cell 21b may, for example, be a lithium ion battery or the like, but this is not to be considered as being limitative. The distributed power supply apparatus 21 may include both the fuel cell device 21a and the storage cell 21b, or may only include either one of them. Moreover, the distributed power supply apparatus 21 also may include a plurality of such fuel cell devices 21a and/or such storage cells 21b. Furthermore, the distributed power supply apparatus 2 may include a power supply device of another type, such as a solar panel or the like. The distributed power supply apparatus 21 will also herein sometimes be termed the "first power generation apparatus". And the second power generation facility 32 that is controlled by the second power enterprise server 12 and that supplies power to the power grid 3 will also herein sometimes be termed the "second power generation apparatus".

The inverter 22 is connected to the distributed power supply apparatus 21 and to the distribution board 23. The inverter 22 receives DC power from the distributed power supply apparatus 21 and converts it into AC power at a predetermined voltage, which it outputs to the distribution board 23.

The distribution board 23 is connected to the inverter 22, to the loads 24, and to the power grid 3. The distribution board 23 receives AC power from the power grid 3 and from the inverter 22, and supplies AC power to the loads 24. Thus, the distributed power supply apparatus 21 is connected to the loads 24 via the inverter 22 and the distribution board 23. In other words, the distributed power supply apparatus 21 is adapted to be capable of supplying power to the loads 24.

The current sensor 25 is provided in wiring that connects the power grid 3 and the distribution board 23, and is communicably connected to the customer facility server 20. And the current sensor 25 measures the current flowing in the wiring that connects the power grid 3 and the distribution board 23, and outputs the measured value of this current to the customer facility server 20. This current sensor 25 may be a smart meter.

### [Contracts entered into with customers]

### <A power supply/demand contract>

Power is supplied to the power grid 3 by the first power enterprise or the second power enterprise. Due to a customer concluding a power supply/reception contract with the first power enterprise, the customer facility 2 of that customer receives from the power grid 3 electrical power supplied by that first power enterprise.

In this embodiment, it is supposed that a power supply/reception contract between the customer and the first power enterprise is a high voltage electricity reception contract. A high voltage electricity reception contract is a contract of a type in which, if the power received by the customer facility 2 from the power grid 3 exceeds a power that is predetermined according to the contract, then the contracted power level is updated, and the basic charge portion of the subsequent electricity charge is increased. The power received from the power grid 3 by the customer facility 2 will herein subsequently be termed the "received power". And the predetermined power according to the contract will herein subsequently be termed the "contracted power level". The received power may be calculated by, for example, taking the average value of the amount of power received by the customer facility 2 per unit time. And the average value of the amount of power received by the customer facility 2 per unit time will also herein sometimes be termed the "demand power". The unit period of time for calculating the demand power will also herein sometimes be termed the "demand period". While, for example, the demand period may be taken as being 30 minutes or the like, this is not to be considered as being limitative.

The customer facility server 20 controls the output of the distributed power supply apparatus according to fluctuations of the power consumed by the loads 24, so that the power received by the customer facility 2 does not exceed the contracted power level. By operating in this manner, it is possible to avoid increase of the electricity cost levied by the first power enterprise upon the customer.

### <A maintenance contract>

Due to the customer concluding a maintenance contract with a maintenance business, the distributed power supply apparatus 21 provided to the customer facility 2 becomes the subject of maintenance by the maintenance business.

The power management server 10 that is provided to the maintenance business acquires information from the customer facility server 20 of the customer facility 2 related to the distributed power supply apparatus 21. This information related to the distributed power supply apparatus 21 may, for example, be the operating time of the distributed power supply apparatus 21, the amount of power generated or its discharge power, or its fault history or the like, but is not to be considered as being limited by the above.

On the basis of this information that has been acquired, the power management server 10 determines whether maintenance of the distributed power supply apparatus 21 is required. And, if the power management server 10 has determined that maintenance of the distributed power supply apparatus 21 is required, then, for example, it may establish a plan for maintenance work, or may command a workman to perform maintenance work.

### [Operation on the basis of contracts]

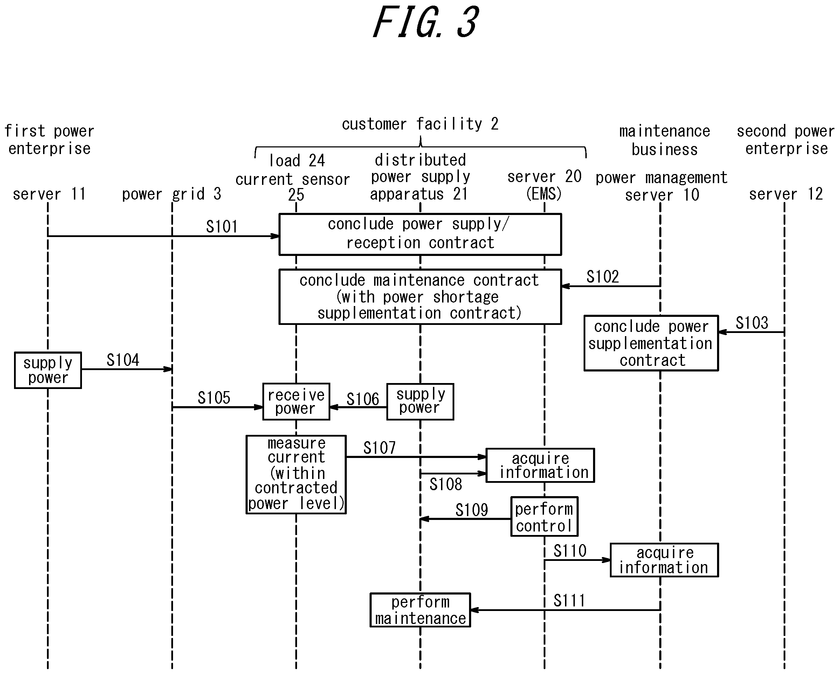

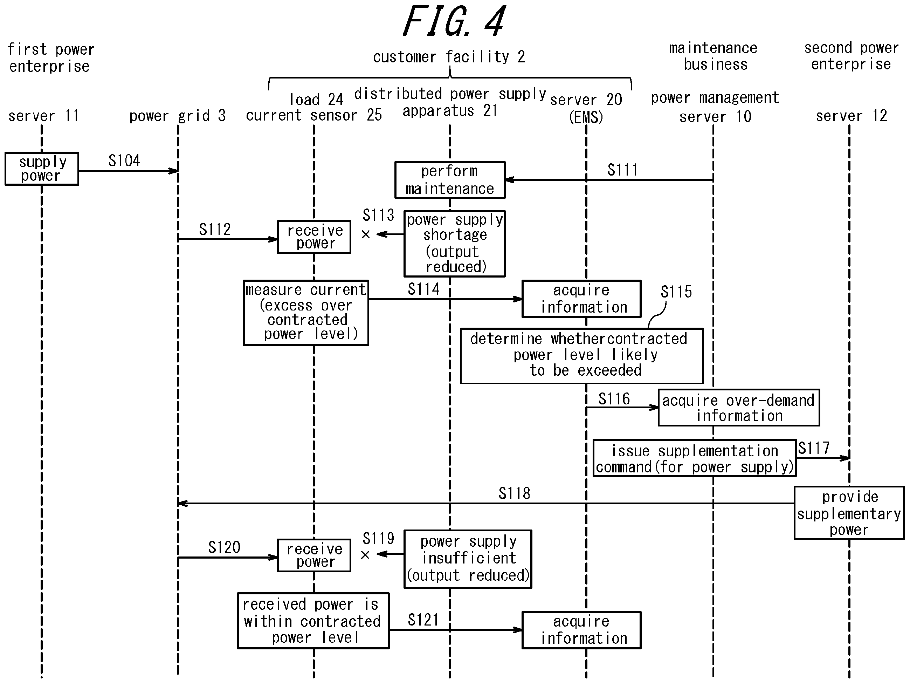

Operations performed on the basis of a power supply/reception contract and a maintenance contract are executed according to the sequence diagrams in Figs. 3 and 4.

The customer who possesses the customer facility 2 concludes a power supply/reception contract with the first power enterprise (step S101). According to this contract, the customer facility 2 is enabled to receive electrical power supplied to the power grid 3 by the first power enterprise. In this embodiment, it is supposed that this contract between the customer and the first power enterprise is a high voltage electricity reception contract.

The customer concludes a maintenance contract with a maintenance business in relation to this customer facility 2 which includes the distributed power supply apparatus 21 (step S102). According to this contract, each section of the customer facility 2 is able to receive maintenance by the maintenance business. The power management server 10 provided to the maintenance business acquires information from the customer facility server 20 about the state of the distributed power supply apparatus 21, and is able to determine whether maintenance thereof is required. For example, the power management server 10 may decide to implement maintenance periodically on the basis of the cumulative operating time of the distributed power supply apparatus 21. Or the power management server 10 may decide to implement maintenance on the basis of the fault history of the distributed power supply apparatus 21 or the like, in order for the distributed power supply apparatus 21 not to fail.

In this embodiment, it will be supposed that the maintenance contract is accompanied by a contract related to power shortage supplementation. Power shortage supplementation is an arrangement for power to be supplied from the maintenance business equivalent to reduction of the output of the distributed power supply apparatus 21, so that the received power does not exceed the contracted power level even if the output of the distributed power supply apparatus 21 is insufficient due to maintenance of the power supply device 21. This power equivalent to the reduction of the output of the distributed power supply apparatus 21 will herein also sometimes be termed the "power deficit".

In order to make it possible to compensate for insufficiency of power, the maintenance business concludes a power supplementation contract with the second power enterprise (step S103). Such a power supplementation contract is a power supply/reception contract that is concluded between the maintenance business and the second power enterprise. According to this contract, the customer facility 2 is able to receive electrical power supplied by the second power enterprise to the power grid 3, and can thereby receive supplementary power to compensate for the power deficit. The maintenance business and the second power enterprise may in fact be the same management entity.

In distribution of electrical power via the power grid 3, it is necessary for the power supplied to the power grid 3 and the power received from the power grid 3 to be in overall balance. However, it is not necessary to check in real time which power enterprise is actually currently supplying the power received by the customer facility 2. For example, in each demand period, the power supplied to the power grid 3 by the various power enterprises and the power received by the various customer facilities 2 may be consolidated and settled.

The first power enterprise supplies electrical power to the power grid 3 (step S104). The loads 24 of the customer facility 2 receive this power supplied by the first power enterprise from the grid 3 (step S105). The loads 24 also receive power outputted from the distributed power supply apparatus 21 (step S106). This power outputted from the distributed power supply apparatus 21 herein will also sometimes be termed the "generated power". In this embodiment, the distributed power supply apparatus 21 includes the fuel cell device 21a and the storage cell 21b. The power generated by the fuel cell device 21a and the power discharged by the storage cell 21b will both be collectively referred to as "generated power".

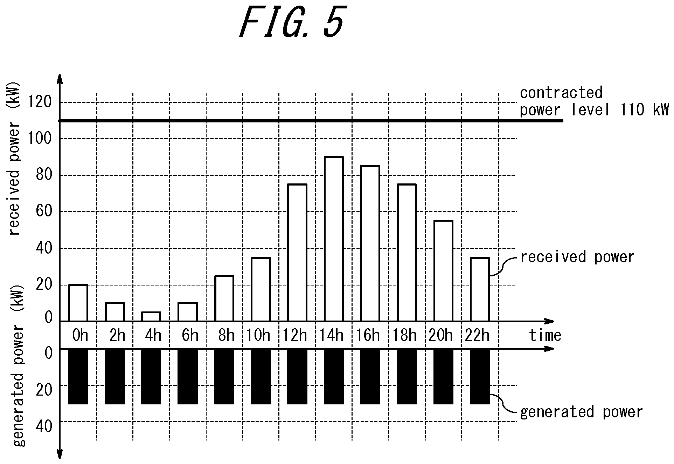

The power consumed by the loads 24 is the sum of the power received by the customer facility 2 and the power generated by the distributed power supply apparatus 21. For example, referring to Fig. 5, the power consumed by the loads 24 is represented by the trend of the sum of the received power and the generated power in each time slot

In Fig. 5, time is shown along the horizontal axis. And received power and generated power are shown along the vertical axis. The upward pointing bars represent received power, and the downward pointing bars represent generated power. For example, the bars corresponding to "12h" represent the received power and the generated power in the time slot from 12h to 14h. And, for example, the bars corresponding to "0h" represent the received power and the generated power in the time slot from 0h to 2h. Moreover, in a similar manner to the above examples of "0h" and "12h", the bars corresponding to the other times represent received power or generated power for the two-hour period whose starting time is each displayed time. The received power and the generated power are represented by white bars and black bars respectively. In Fig. 5, the received power is calculated by integrating the power received from the power grid 3 during each time slot and taking the average. And the generated power is calculated by integrating the power outputted from the distributed power supply apparatus 21 during each time slot and taking the average.

Referring to Fig. 5, for example, in the time slot from 14h to 16h, the received power is 90 kW, and this is the maximum value during this one day. On the other hand, in the time slot from 4h to 6h, the received power is 5 kW, and this is the minimum value during this one day. The generated power is constant at 30 kW in each time slot. It is possible to keep the generated power constant when no fault or anomaly occurs in connection with the distributed power supply apparatus 21, and when also no maintenance is being performed.

As shown in Fig. 3, the customer facility server 20 acquires the value measured by the current sensor 25 (step S107). And the customer facility server 20 acquires information specifying the state of the distributed power supply apparatus 21 (step S108). The customer facility server 20 calculates the received power on the basis of the value measured by the current sensor 25, and controls the output of the distributed power supply apparatus 21 so that the received power does not exceed the contracted power level (step S109).

The customer facility server 20 outputs the information that has been acquired to the power management server 10 (step S110). The power management server 10 acquires the information specifying the state of the distributed power supply apparatus 21, and determines whether to perform maintenance of the distributed power supply apparatus 21 on the basis of the state of the distributed power supply apparatus 21 (step S111). If the power management server 10 decides that maintenance of the distributed power supply apparatus 21 should be performed, then the distributed power supply apparatus 21 is changed over to a maintenance mode.

The power management server 10 determines the timing for maintenance of the distributed power supply apparatus 21. This timing for maintenance is determined in consideration of the cost of the maintenance work and the increase in the power received by the customer facility 2 due to stopping or reduction of the output of the distributed power supply apparatus 21.

### <Maintenance according to this embodiment>

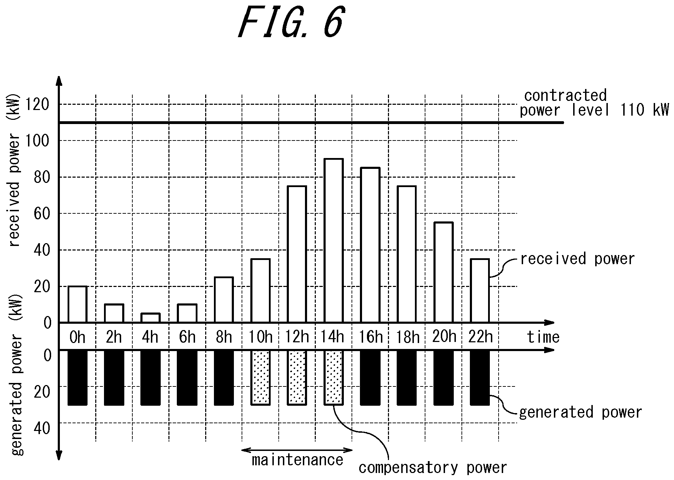

In Fig. 6, similarly to Fig. 5, the power consumption of the loads 24 is given by the change of the sum of the received power and the generated power in each time slot. Since the explanation of the axes of the graph shown in Fig. 6 would be the same as for those of Fig. 5, such explanation is omitted here.

In Fig. 6, the maintenance of the distributed power supply apparatus 21 is implemented in the interval from 10h to 16h. By implementing maintenance during a daytime time slot, it is possible to reduce the cost of the maintenance work, since the unit cost for the workers is that of normal daytime working.

Due to maintenance of the distributed power supply apparatus 21, the generated power shown by the black bars is zero from 10h to 16h. Accordingly, power equivalent to the generated power is supplied from the second power enterprise, this compensatory power being shown by the shaded bars. As a result, even during maintenance of the distributed power supply apparatus 21, the received power from the first power enterprise remains within the contracted power level. In other words, according to this embodiment, the time slot for implementing maintenance of the distributed power supply apparatus 21 can be determined comparatively freely. As a result, the cost of the maintenance work can be reduced, and also it is ensured that the received power does not exceed the contracted power level.

Returning to Fig. 4, the first power enterprise supplies power to the power grid 3 (step S104). Step S104 is the same as step S104 of Fig. 3. And step Sill is the same as step Sill of Fig. 3. After step S111, the loads 24 receive power supplied by the first power enterprise from the power grid 3 (step S112). And, when the distributed power supply apparatus 21 changes over to its maintenance mode and stops or reduces its output, the loads 24 do not receive power from the distributed power supply apparatus 21, or receive less power than normal (step S113).

The customer facility server 20 acquires the value measured by the current sensor 25 (step S114). And the customer facility server 20 calculates the received power on the basis of the value measured by the current sensor 25, and determines whether the received power is likely to exceed the contracted power level (step S115).

If, in step S115, it is determined that the received power is likely to exceed the contracted power level, then the customer facility server 20 outputs information to the effect that this situation has occurred to the power management server 10 (step S116). This information to the effect that the received power is likely to exceed the contracted power level will herein also sometimes be referred to as "over-demand information".

The power management server 10 outputs control information to the second power enterprise server 12 including a command for providing supplementary power to the power grid 3 equivalent to the amount by which the received power is currently being exceeded, in order for the power received by the customer facility 2 not to exceed the contracted power level (step S117). In other words, according to the state of the distributed power supply apparatus 21, the power management server 10 outputs control information to the second power enterprise server instructing supply of supplementary power to the power grid 3.

The second power enterprise provides supplementary power to the power grid 3 (step S118). This power supplied to the power grid 3 from the second power enterprise is provided in order to replace the power that is deficient at the customer facility 2 due to maintenance of the distributed power supply apparatus 21. The loads 24 are not receiving electricity from the distributed power supply apparatus 21, or are receiving less electricity than usual therefrom (step S119). Thus, in addition to the power supplied from the first power enterprise, the loads 24 receive power from the power grid 3 that has been supplied on a supplementary basis by the second power enterprise, to an amount that is equivalent to the power deficit (step S120). In this step S120, in Fig. 6, power that matches the received power shown by the white bars and the compensatory power shown by the shaded bars is supplied from the power grid 3 to the loads 24.

The customer facility server 20 acquires the value measured by the current sensor 25 (step S121). And the customer facility server 20 checks that the power received from the first power enterprise is within the contracted power level.

According to the power management system 1 according to this embodiment, even if the amount of power received from the distributed power supply apparatus 21 in the customer facility 2 is insufficient, this power is supplemented from the second power enterprise. As a result, it can be ensured that the power received from the first power enterprise does not exceed the contracted power level. Even if a power deficit occurs due to a sudden fault with the distributed power supply apparatus 21, still it is possible to ensure that the received power does not exceed the contracted power level.

### <Maintenance according to Comparison Example #1>

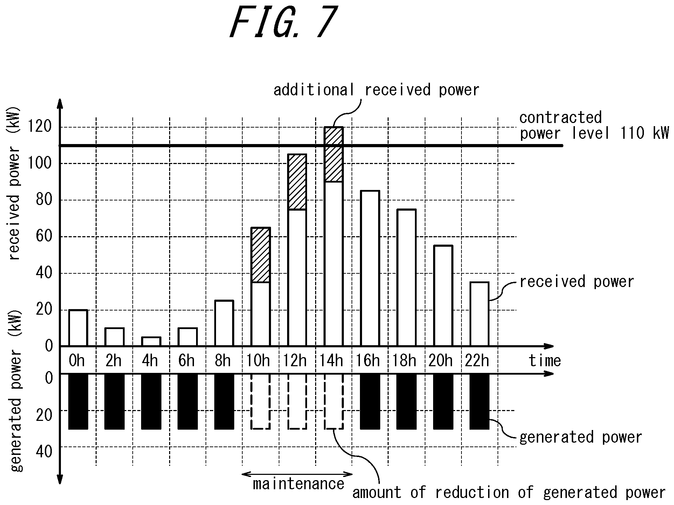

In maintenance according to Comparison Example #1, maintenance of the distributed power supply apparatus 21 is implemented in a time slot in which the received power is high. An example of changing over of the sum of the received power and the generated power when the maintenance according to Comparison Example #1 is performed is shown in Fig. 7. In Fig. 7, similarly to Fig. 5, the power consumption of the loads 24 in each time slot is given by the variation of the sum of the received power and the generated power. Since the explanation of the axes of the graph shown in Fig. 7 and of the values shown by the bars would be the same as for Fig. 5, accordingly such explanation is omitted.

In Fig. 7, the maintenance of the distributed power supply apparatus 21 is implemented in the interval from 10h to 16h. In this case, by implementing maintenance during a daytime time slot, there is the merit that it is possible to reduce the cost of the maintenance work, since the unit cost for the workers is that of normal daytime working. On the other hand, due to the maintenance of the distributed power supply apparatus 21, the generated power shown by the black bars is zero from 10h to 16h. And power equivalent to the generated power is added on to the received power shown by the white bars, as additional received power shown by the hatched bars.

During maintenance of the distributed power supply apparatus 21 the received power increases, but in particular the received power in the interval from 14h to 16h exceeds the contracted power level, because additional received power is added on. In this case, the contracted power level that is employed for calculation of the electricity charge demanded from the customer by the first power enterprise will increase. In this case, the merit that it is possible to reduce the cost of the maintenance work by performing it during the daytime becomes smaller because to do so invites an increase in the electricity charge, and, if anything, the total cost may rather sometimes be increased.

### <<Contract for supply of private power generation>>

In order to alleviate the demerit that may occur in Comparison Example #1 that the received power may exceed the contracted power level, sometimes a contract for supply of private power generation is added into the power supply/reception contract that is concluded between the customer and the first power enterprise. The customer may conclude a contract for supply of private power generation with the second power enterprise, i.e. not only with the first power enterprise. And the customer may conclude a contract for supply of private power generation with yet another power enterprise that is different from both of the first and the second power enterprises. For example, if the customer concludes a power supply/reception contract with a general electricity supplier, then he may conclude a contract for supply of private power generation with the same general electricity supplier, or may conclude a contract for supply of private power generation with a PPS. And, if the customer concludes a power supply/reception contract with a PPS, he may conclude a contract for supply of private power generation with that same PPS, or may conclude a contract for supply of private power generation with another PPS, or may conclude a contract for supply of private power generation with a general electricity supplier. Moreover, a contract for supply of private power generation may be concluded between the maintenance business and a power enterprise. A maintenance business may also combine a contract for supply of private power generation with the provision of maintenance work, and may conclude a contract with the customer to that effect.

When a contract for supply of private power generation has been supplemented to a power supply/reception contract, increase in electricity charge due to the received power exceeding the contracted power level is eliminated. On the other hand, the customer is burdened with the predetermined contract fee related to the contract for supply of private power generation as a cost, so that the merit of performing maintenance work during the daytime is diminished to a certain extent.

### <Maintenance according to Comparison Example #2>

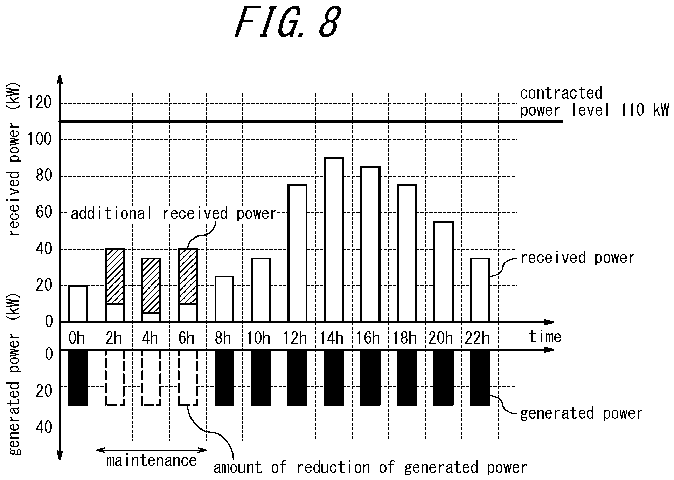

In maintenance according to Comparison Example #2, maintenance of the distributed power supply apparatus 21 is implemented in a time slot in which the received power is low. An example of changeover of the sum of the received power and the generated power when the maintenance according to Comparison Example #2 is performed is shown in Fig. 8. In Fig. 8, similarly to Fig. 5, the power consumption of the loads 24 in each time slot is given by the variation of the sum of the received power and the generated power. Since the explanation of the axes of the graph shown in Fig. 8 and of the values shown by the bars would be the same as for Fig. 5, accordingly it is omitted.

In Fig. 8, the maintenance of the distributed power supply apparatus 21 is implemented from 2h (late at night) to 8h (in the morning). In this case, the received power is basically low in the time slot from late at night to early in the morning. Accordingly it is difficult for the received power to exceed the contracted power level, even if additional received power is added on due to stopping or decrease of the output of the distributed power supply apparatus 21 because of maintenance. In other words, it is difficult for the received power to exceed the contracted power level, due to the fact that the time slot for maintenance has been shifted away from peak time slots.

Performing maintenance work late at night is a burden upon the workers, and risks deterioration of their working efficiency and/or increase in the cost of the work. Moreover, if the distributed power supply apparatus 21 should break down suddenly, then it becomes necessary to implement maintenance work immediately. In this case, the time slot for performing the maintenance work cannot be shifted to late at night.

### <Maintenance according to Comparison Example #3>

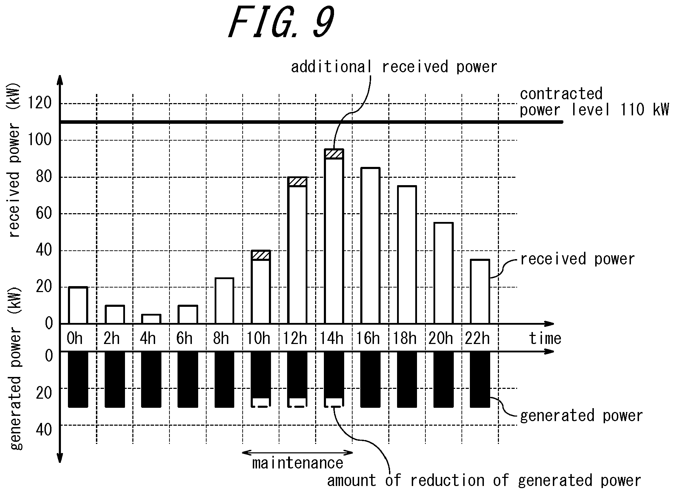

In maintenance according to Comparison Example #3, the maintenance of distributed power supply apparatuses 21, of which a plurality are provided to the customer facility 2, is implemented in a staggered manner. An example of changeover of the sum of the received power and the generated power when the maintenance according to Comparison Example #2 is performed is shown in Fig. 9. In Fig. 9, similarly to Fig. 5, the power consumption of the loads 24 in each time slot is given by the variation of the sum of the received power and the generated power. Since the explanation of the axes of the graph shown in Fig. 9 and of the values shown by the bars would be the same as for Fig. 5, accordingly it is omitted.

In Fig. 9, the maintenance of the distributed power supply apparatuses 21 is implemented in the interval from 10h to 16h. The plurality of distributed power supply apparatuses provided to the customer facility 2 are divided into a number of groups, and decrease of the generated power is reduced by performing the maintenance for each group in a staggered manner. For example, the plurality of distributed power supply apparatuses may be maintained one at a time, or may be maintained in groups of two or more at a time. By doing this, it is possible to reduce the additional received power that must be added on to the received power. It is still possible to ensure that the received power does not exceed the contracted power level, even if the time slot for maintenance and the peak time slot for received power overlap.

On the other hand, due to the plurality of distributed power supply apparatuses 21 being maintained in a staggered manner, the number of days required for the maintenance of all of the distributed power supply apparatuses 21 is likely to be increased. Moreover the working efficiency is likely to deteriorate due to the staggering of the maintenance work. And, because of the increase in the number of days required for maintenance work, the number of days that the workmen must work will probably be increased. As a result, the cost sometimes increases. Moreover, if one or more of the distributed power supply apparatuses 21 should break down suddenly, then it becomes impossible to implement staggered maintenance working.

As compared with Comparison Examples 1 through 3, with the method of implementing maintenance according to the first embodiment of the present disclosure, the time slot for implementing maintenance of the distributed power supply apparatus 21 can be determined comparatively freely. As a result, along with it being possible to reduce the cost of maintenance work, it is possible to ensure that the received power does not exceed the contracted power level. Accordingly, it is possible to reduce both the cost of the contract with the power enterprise and also the labor cost related to maintenance of the distributed power supply apparatus.

### [Management of received power in the customer facility]

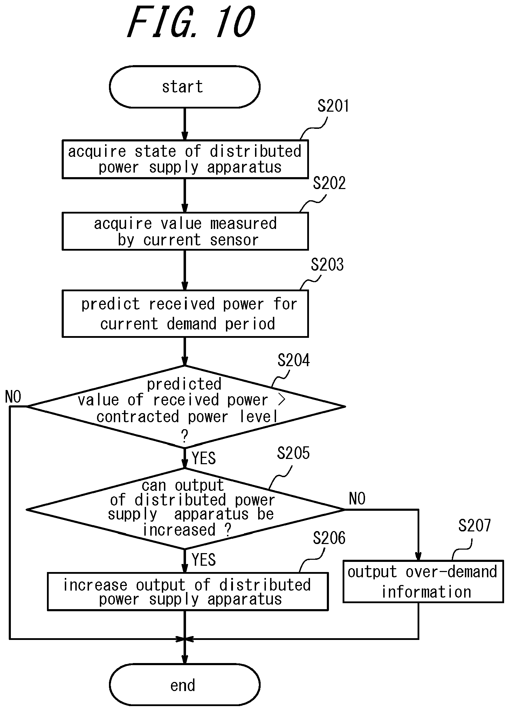

The customer facility server 20 is able to manage the power received by the customer facility 2 according to the procedure shown in the flow chart of Fig. 10. The flow chart of Fig. 10 includes a step corresponding to the decision in step S115 of Fig. 4 as to whether the received power is likely to exceed the contracted power level.

The controller 20a of the customer facility server 20 acquires the state of the distributed power supply apparatus 21 (step S201). And the controller 20a may store the state of the distributed power supply apparatus 21 in the storage unit 20b. This state of the distributed power supply apparatus 21 may, for example, include the amount of electricity generated by the fuel cell device 21a, the maximum output of the fuel cell device 21a, the charge ratio of the storage cell 21b, the health of the storage cell 21b, the maximum output of the storage cell 21b, or the like, but these possibilities should not be considered as being limitative.

The controller 20a acquires the value measured by the current sensor 25 (step S202). And the controller 20a may store the value measured by the current sensor 25 in the storage unit 20b. The value measured by the current sensor 25 represents the magnitude of the current from the power grid 3 to the distribution board 23.

On the basis of the value measured by the current sensor 25, the controller 20a predicts the received power for the current demand period (step S203). For example, one method of predicting the received power is a method of calculating the integrated amount of power in the demand period by integrating the instantaneous power corresponding to the value measured by the current sensor 25. The controller 20a calculates the integrated amount of power P at some time point t within the demand period. This integrated amount of power P is calculated by integrating the power over the time points from the time point 0 to the time point t. The controller 20a calculates the integrated amount of power P+ΔP at the time point t+Δt. The controller 20a calculates the amount of increase ΔP of the integrated amount of power from the time point t to the time point t+Δt, and calculates the rate of change ΔP/Δt of the integrated amount of power per unit time. The controller 20a is able to calculate the integrated amount of power at the expiration of the demand period on the basis of the assumption that the rate of change ΔP/Δt will continue constant after the time point t+Δt. The demand power is a value obtained by dividing the integrated amount of power at the expiration of the demand period by the length of the demand period.

The controller 20a then determines whether the predicted value of the received power exceeds the contracted power level (step S204). If the predicted value of the received power does not exceed the contracted power level (NO in step S204), then the controller 20a terminates the processing of the Fig. 10 flow chart.

If the predicted value of the received power exceeds the contracted power level (YES in step S204), then the controller 20a determines whether it is possible to increase the output of the distributed power supply apparatus 21 (step S205).

If it is possible to increase the output of the distributed power supply apparatus 21 (YES in step S205), then the controller 20a outputs a control command for increasing the output of the distributed power supply apparatus 21 (step S206). After step S206, the controller 20a terminates the processing of the Fig. 10 flow chart.

If it is not possible to increase the output of the distributed power supply apparatus 21 (NO in step S205), then the controller 20a outputs excess information to the power management server 10 (step S207).

The case in which it is determined that the received power is likely to exceed the contracted power level is the case in which the predicted value of the received power exceeds the contracted power level (YES in step S204) and also it is not possible to increase the output of the distributed power supply apparatus 21 (NO in step S205). In other words, step S204 and step S205 of Fig. 10 correspond to the decision in step S115 of Fig. 4 as to whether the received power seems likely to exceed the contracted power level.

After step S207, the controller 20a terminates the processing of the Fig. 10 flow chart.

As explained above with reference to Fig. 10, the customer facility server 20 controls the distributed power supply apparatus 21 so that the power received by the customer facility 2 does not exceed the contracted power level. By doing this, increase in the electricity charge related to the customer facility 2 can be reduced.

### [Operation of the power management system]

In the customer facility 2, the distributed power supply apparatus 21 is controlled so that the received power does not exceed the contracted power level. The power management server 10, which is communicably connected to the customer facility server 20, acquires information specifying the state of the distributed power supply apparatus 21, and monitors the state of the distributed power supply apparatus 21. And the power management server 10 is communicably connected to the second power enterprise server 12, and issues a command to the second power enterprise for supply of power to the power grid 3.

When a fault or an anomaly occurs in the operation of the distributed power supply apparatus 21, the power management server 10 may notify the maintenance business of information related to the fault or the anomaly. And, on the basis of the information specifying the state of the distributed power supply apparatus 21, the power management server 10 may calculate a maintenance period for the distributed power supply apparatus 21, and may notify the maintenance business of this maintenance period.

On the basis of the information specifying the state of the distributed power supply apparatus 21, the power management server 10 determines whether the output of the distributed power supply apparatus 21 is reduced. If the output of the distributed power supply apparatus 21 is reduced, then the power management server 10 outputs information to the second power enterprise server 12, commanding it to supply the deficit in power to the power grid 3. The power that is then supplied from the second power enterprise is added to the power being supplied from the first power enterprise, and is supplied together therewith to the loads 24 of the customer facility 2 via the power grid 3.

### <Processing by the power management server on the basis of the state of the distributed power supply apparatus>

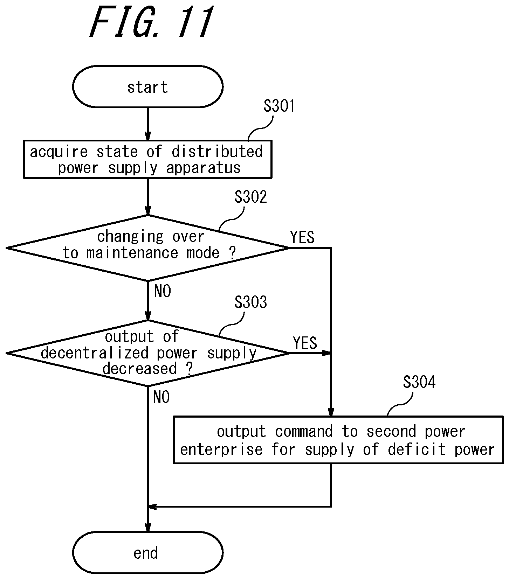

The power management server 10 performs processing on the basis of the state of the distributed power supply apparatus 21 by executing steps shown in the flow chart of Fig. 11. The power management server 10 first acquires information specifying the state of the distributed power supply apparatus 21 from the customer facility server 20 (step S301). Information to the effect that the power supply device 21 will transition to its maintenance mode may be included in the state of the distributed power supply apparatus 21. The output of the distributed power supply apparatus 21 is included in the state of the distributed power supply apparatus 21.

The power management server determines whether the distributed power supply apparatus 21 will transition to the maintenance mode (step S302). If the distributed power supply apparatus 21 will transition to the maintenance mode (YES in step S302), then the power management server 10 outputs a command for supply of the deficit power to the second power enterprise server 12 (step S304). And then the power management server 10 terminates the processing of Fig. 11.

If the distributed power supply apparatus 21 will not transition to the maintenance mode (NO in step S302), then the power management server 10 determines whether the output of the distributed power supply apparatus 21 has decreased (step S303).

If the output of the distributed power supply apparatus 21 has not decreased (NO in step S303), then the power management server 10 terminates the processing of Fig. 11. But if the output of the distributed power supply apparatus 21 has decreased (YES in step S303), then the power management server 10 outputs a command for supply of the power deficit to the second power enterprise server 12 (step S304). And then the power management server 10 terminates the processing of Fig. 11.

### <Processing by the power management server on the basis of the over-demand information>

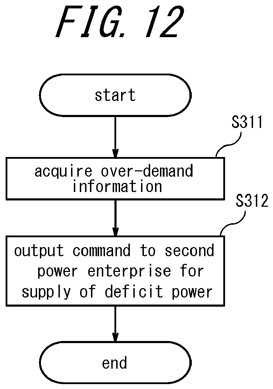

The power management server 10 is able to perform acquisition of the over-demand information from the customer facility server 20 in step S116 of Fig. 4 by executing the procedure shown in the flow chart of Fig. 12.

First, the power management server 10 acquires the over-demand information from the customer facility server 20 (step S311).

The power management server 10 outputs a command for supply of the power deficit to the second power enterprise server 12 (step S312). Then the power management server 10 terminates the processing of Fig. 12.

### <Processing by the second power enterprise server on the basis of a power supply shortage command>

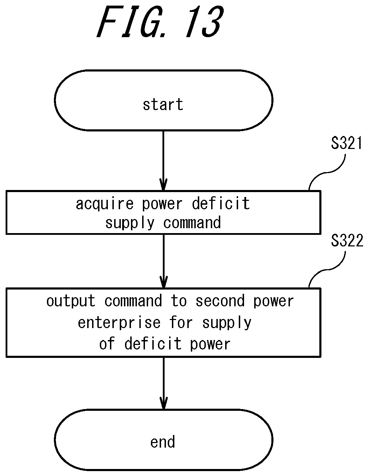

When the second power enterprise server 12 has acquired a command for supply of the power deficit from the power management server 10, it executes the processing shown in the flow chart of Fig. 13.

The second power enterprise server 12 acquires the power deficit supply command from the power management server 10 (step S321). The power deficit supply command includes the amount of power that the second power enterprise should supply to the power grid 3, and the period at which that power should be supplied.

On the basis of this power deficit supply command, the second power enterprise server 12 outputs a command to the second power generation facility 32 for supply of the power deficit (step S322). The second power generation facility 32 then supplies power to the power grid 3 according to that command. The second power enterprise server 12 terminates the processing of Fig. 13.

With the power management system 1 and the power management method according to this embodiment explained above, it becomes simple and easy to ensure that the received power does not exceed the contracted power level, even during maintenance of the distributed power supply apparatus 21 or the like.

### (Embodiment #2)

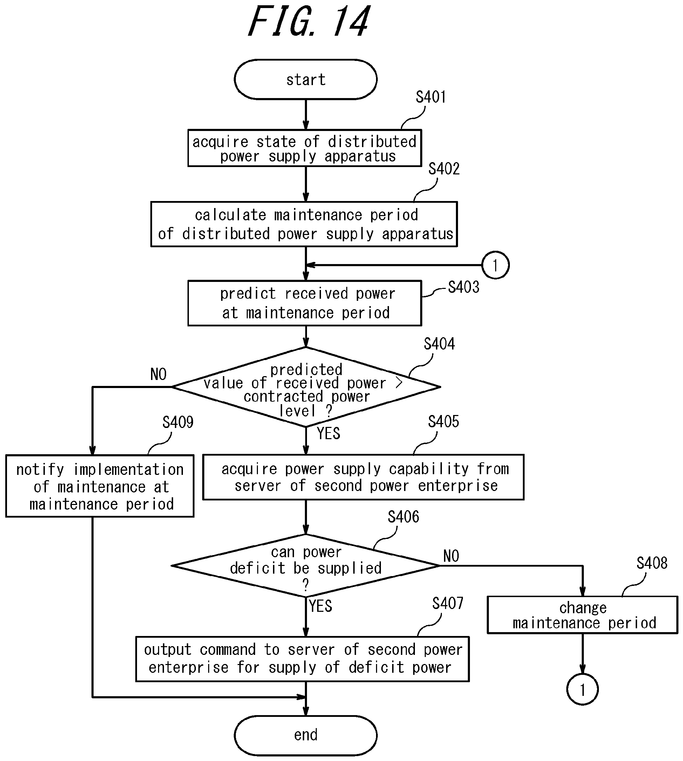

In the first embodiment explained above, the power management server 10 performs processing to compensate for the deficit in power, according to the state of the distributed power supply apparatus 21. However, in a second embodiment, the power management server 10 checks whether it is possible for the second power enterprise server 12 to compensate for the power deficit, according to the procedure shown by the flow chart of Fig. 14.

First, the power management server 10 acquires the state of the distributed power supply apparatus 21 (step S401). The operation in step S401 is the same as the operation in step S201 of Fig. 10.

The power management server 10 calculates a maintenance period for the distributed power supply apparatus 21 on the basis of the state of the distributed power supply apparatus 21 (step S402). The information specifying the state of the distributed power supply apparatus 21 may include the amount of electricity generated by the fuel cell device 21a, the maximum output of the fuel cell device 21a, the charge ratio of the storage cell 21b, the health of the storage cell 21b, the maximum amount of the storage cell 21b, or the like. And the information specifying the state of the distributed power supply apparatus 21 may also include the operating time of the distributed power supply apparatus 21 and/or fault information relating to the distributed power supply apparatus 21.

On the basis of the information specifying the state of the distributed power supply apparatus 21, the power management server 10 calculates a maintenance period for the distributed power supply apparatus 21, in other words calculates whether the appropriate timing for performing the next maintenance should be right now, or after how many days it should be. For example, if fault information for the distributed power supply apparatus 21 has been acquired, then the power management server 10 may calculate that the appropriate maintenance period is right now. Or, for example, the power management server 10 may calculate the maintenance period on the basis of the operating time of the distributed power supply apparatus 21. Or again, for example, the power management server 10 may calculate the maintenance period on the basis of prediction of the amount of power generated by the fuel cell device 21a, or of the health of the storage cell 21b or the like.

The power management server 10 predicts the received power of the customer facility 2 at the maintenance period of the distributed power supply apparatus 21 (step S403). The power management server 10 may predict the received power at the maintenance period on the basis of the decrease in output due to maintenance of the distributed power supply apparatus 21, and changeover data for the received power acquired from the customer facility server 20. And the power management server 10 may acquire the predicted value of the received power from the customer facility server 20, and may predict the received power at the maintenance period in consideration of decrease in the output of the distributed power supply apparatus 21 due to maintenance.

The power management server 10 then determines whether the predicted value of the received power exceeds the contracted power level (step S404). The processing in step S404 is the same as that in step S204 of Fig. 10.

If the predicted value of the received power exceeds the contracted power level (YES in step S404), then the power management server 10 acquires the power that can be supplied by the second power enterprise at the maintenance period from the second power enterprise server 12 (step S405). The power that can be supplied by the second power enterprise is the power than can be supplied to the power grid by the second power enterprise using the second power generation facility 32.

On the basis of the power that can be supplied by the second power enterprise at the maintenance period, the power management server 10 determines whether the second power enterprise is capable of compensating for the power deficit (step S406).

If the second power enterprise is capable of providing the power deficit (YES in step S406), then the power management server 10 outputs a command to the second power enterprise server 12 to supply the power deficit (step S407). And then the power management server 10 terminates the processing of Fig. 14.

But if the second power enterprise is not capable of providing the power deficit (NO in step S406), then the power management server 10 changes the maintenance period of the distributed power supply apparatus 21 (step S408). In this case, the power management server 10 recalculates the maintenance period. The maintenance period may be advanced, or may be postponed. When calculating the maintenance period in step S402, the power management server 10 may calculate the maintenance period with a certain leeway, in consideration of the possibility that the maintenance period may be changed. After step S408, the power management server 10 then returns the flow of control to step S403.

And, if the predicted value of the received power does not exceed the contracted power level (NO in step S404), then the power management server 10 notifies the maintenance business, commanding it to implement maintenance of the distributed power supply apparatus 21 at the maintenance period (step S409). And then the power management server 10 terminates the processing of Fig. 14.

Thus, with the power management system 1 according to this second embodiment, it is possible to compensate for the power deficit at the time of maintenance of the distributed power supply apparatus 21.

Although the embodiments according to the present disclosure have been explained on the basis of the appended drawings and various concrete examples, it should be understood that, for a person skilled in the art, it would be simple and easy to make various changes or modifications on the basis of the disclosure herein. Accordingly, such changes or modifications should be also considered as coming within the scope of this disclosure. For example, it would be possible to rearrange the structural elements or the functions or the like that are included in the constituent steps of the present disclosure, provided that no logical contradiction arises; and it would also be acceptable to combine a plurality of structural elements or constituent steps into one, or to divide one or more of them up. Moreover, although the explanation in the present disclosure has focused upon various sets of apparatus according to the various embodiments, each of the embodiments could also be implemented as a method including steps that are executed by the various structural elements of such apparatus. Moreover, although according to the explanations in this disclosure the embodiments have been explained with reference chiefly to apparatus, the embodiments according to this disclosure may also be implemented as methods or programs that are executed by processors included in devices, or as storage media upon which such programs are stored. These various aspects are also to be understood as being included in the scope of the present disclosure.

### REFERENCE SIGNS LIST

1: power management system
10: power management server
11: first power enterprise server
12: second power enterprise server (power supply server)
2: customer facility
20: customer facility server
21: distributed power supply apparatus (first power generation apparatus)
21a: fuel cell device
21b: storage cell
22: inverter
23: distribution board
24: load
25: current sensor
3: power grid
30: power generation facility
31: first power generation facility
32: second power generation facility (second power generation apparatus)

## Claims

1. A power management server comprising a controller that is configured to be communicably connected to a first power generation apparatus that supplies power to a load of a customer facility that is connected to a power grid, and to a power supply server that manages supply of power to the power grid from a second power generation apparatus that is different from the first power generation apparatus;
wherein the controller is configured to acquire a state of the first power generation apparatus, and, if the controller has acquired information that the first power generation apparatus will change over to a maintenance mode, to output to the power supply server a supply command to cause the second power generation apparatus to supply power corresponding to a reduction in output of the first power generation apparatus.

2. A power management server according to Claim 1, configured to cause the first power generation apparatus to transition to a maintenance mode on the basis of the state of the first power generation apparatus.

3. A power management server according to Claim 2, configured to:
calculate a maintenance period of the first power generation apparatus on the basis of the state of the first power generation apparatus; and
determine whether to cause the first power generation apparatus to change over to the maintenance mode at the maintenance period, on the basis of a predicted value for power that can be supplied from the second power generation apparatus at the maintenance period.

4. A power management server according to Claim 3, configured to recalculate the maintenance period when it has been determined not to cause the first power generation apparatus to transition to the maintenance mode at the maintenance period.

5. A power management system, comprising:
a first power generation apparatus that supplies power to a load of a customer facility that is connected to a power grid;
a power management server that acquires a state of the first power generation apparatus; and
a power supply server that manages supply of power to the power grid from a second power generation apparatus that is different from the first power generation apparatus;
wherein the power management server, if the power management server has acquired information that the first power generation apparatus will change over to a maintenance mode, outputs to the power supply server a supply command to cause the second power generation apparatus to supply power corresponding to a reduction in the output of the first power generation apparatus.

6. A power management system according to Claim 5, wherein the power management server is configured to cause the first power generation apparatus to transition to the maintenance mode on the basis of the state of the first power generation apparatus.

7. A power management system according to Claim 6, wherein the power management server is configured to:
calculate a maintenance period of the first power generation apparatus on the basis of the state of the first power generation apparatus; and
determine whether to cause the first power generation apparatus to change over to the maintenance mode at the maintenance period on the basis of a predicted value for the power that can be supplied from the second power generation apparatus at the maintenance period.

8. A power management system according to Claim 7, wherein the power management server is configured to recalculate the maintenance period when it has been determined not to cause the first power generation apparatus to transition to the maintenance mode at the maintenance period.

9. A power management method for a power management server that is configured to be communicably connected to a first power generation apparatus that supplies power to a load of a customer facility that is connected to a power grid, and to a power supply server that manages supply of power to the power grid from a second power generation apparatus that is different from the first power generation apparatus, including:
a step of acquiring a state of the first power generation apparatus; and
a step of, if having acquired information that the first power generation apparatus will change over to a maintenance mode, outputting to the power supply server a supply command to cause the second power generation apparatus to supply power corresponding to a reduction in output of the first power generation apparatus.

10. A power management method according to Claim 9, further including a step of causing the first power generation apparatus to transition to a maintenance mode on the basis of the state of the first power generation apparatus.

11. A power management method according to Claim 10, further including:
a step of calculating a maintenance period of the first power generation apparatus on the basis of the state of the first power generation apparatus; and
a step of determining whether to cause the first power generation apparatus to change over to the maintenance mode at the maintenance period, on the basis of a predicted value for power that can be supplied from the second power generation apparatus at the maintenance period.

12. A power management method according to Claim 11, further including a step of recalculating the maintenance period when it has been determined not to cause the first power generation apparatus to transition to its maintenance mode at the maintenance period.
